# EUROPEAN PATENT APPLICATION

(11) **EP 4 220 831 A1**
(43) Date of publication of application: **02.08.2023**
(21) Application number: 22870197.5
(22) Date of filing: 06.09.2022
(51) Int. Cl.: H01M 50/242, H01M 50/211

(54) **BATTERY MODULE AND BATTERY PACK INCLUDING SAME**

(30) Priority: 16.09.2021 KR 20210124085
(71) Applicant: LG Energy Solution, Ltd., Seoul 07335 (KR)
(72) Inventor: KIM, Dooseung, Daejeon 34122 (KR); YANG, Jaehun, Daejeon 34122 (KR); LEE, Jung Hoon, Daejeon 34122 (KR); KIM, Seho, Daejeon 34122 (KR); PARK, Jeong Gi, Daejeon 34122 (KR)
(74) Representative: Goddar, Heinz J.
(86) International application number: PCT/KR2022/013376
(87) International publication number: WO 2023/043112

(57) **Abstract**

The present disclosure relates to a battery module and a battery pack including the same, and the battery module according to one embodiment of the present disclosure includes: a battery cell stack in which a plurality of battery cells are stacked; a module frame that houses the battery cell stack; and a damper included in the module frame or located adjacent to the module frame, wherein the module frame comprises an upper cover that wraps an upper surface of the battery cell stack and a bottom part that wraps a lower surface of the battery cell stack, and wherein the damper comprises a viscous damper or a viscoelastic damper.

## Description

### [TECHNICAL FIELD]

### Cross Citation with Related Application so

This application claims the benefit of Korean Patent Application No. 10-2021-0124085 filed on September 16, 2021 with the Korean Intellectual Property Office, the entire contents of which are incorporated herein by reference.

The present disclosure relates to a battery module and a battery pack including the same, and more particularly to a battery module that ensures structural safety, suppresses swelling and prolongs life, and a battery pack including the same.

### [BACKGROUND]

Along with the technology development and increased demand for mobile devices, demand for secondary batteries as energy sources has been increasing rapidly. Accordingly, many researches on the battery capable of meeting various demands are being performed.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy housing source, there is a growing demand for a battery pack of middle- or large-sized module structure which is an assembly of battery modules in which a plurality of secondary batteries are connected in series or in parallel.

Meanwhile, when a plurality of battery cells are connected in series or in parallel to configure a battery pack, it is common to configure a battery module composed of at least one battery cell and then configure a battery pack by using at least one battery module and adding other components. The battery cells constituting such a middle or large-sized battery module are composed of chargeable/dischargeable secondary batteries, and when charging and discharging proceed, a volume deviation of the battery cells occurs. When such battery cell swelling occurs, the battery cells cannot return to their original state before discharging, and the volume change of the battery cells further increases during progress of cycle, thereby reducing battery life.

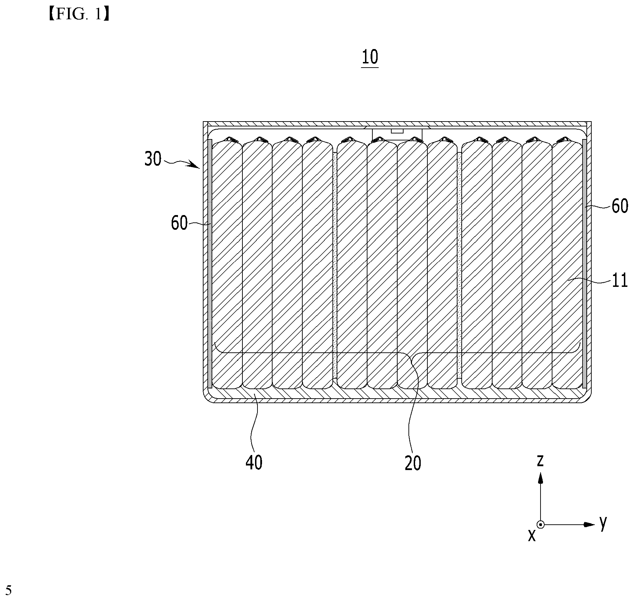

Fig. 1 is a cross-sectional view of a conventional battery module.

Referring to Fig. 1, the battery module 10 includes a battery cell stack 20 in which a plurality of battery cells 11 are stacked, a module frame 30 that wraps the upper surface (z-direction), lower surface (-z direction), and both side surfaces (y-direction and -y-direction) of the battery cell stack 20, a thermally conductive resin layer 40 located between the battery cell stack 20 and the bottom part of the module frame 30, and compression pads 60 respectively located at both ends of the battery cell stack 20.

The compression pad 60 can be located between the outermost battery cell of the battery cell stack 20 and the module frame 30 to absorb swelling of the battery cells 11. Also, the compression pad 60 generates a repulsive force between the battery cell 11 and the module frame 30 to fix the battery cell stack 12 to an inside of the module frame 30, and functions to absorb the increase in volume due to swelling when swelling of the battery cell 11 occurs due to the temperature rise of the battery cell 11 and cycle aging of the battery cell 11 under use.

However, the compression pad 60 has a limit in the expansion force according to the compression, and thus, the amount of swelling absorption is limited. In addition, since the compression pad 60 can only partially absorb the swelling of the battery cells 11 and cannot suppress the swelling itself, there is a problem that it cannot become a fundamental component for solving the swelling phenomenon.

Therefore, attempts are made to suppress cell swelling as much as possible in order to reduce the occurrence of the above problems, and there is a need to increase the life and safety of the battery module by applying a configuration that applies pressure to the battery cell.

### [DETAILED DESCRIPTION OF THE INVENTION]

### [Technical Problem]

The present disclosure is designed to solve the above-mentioned problems, and an object of the present disclosure is to provide a battery module having improved safety and prolonged life and a battery pack including the same.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked; a module frame that houses the battery cell stack; and a damper that absorbs and suppresses swelling of the battery cell, wherein the damper includes a viscous damper or a viscoelastic damper.

The damper may be provided inside the battery frame.

The battery cell stack may be housed in the module frame such that the stacking directions of the plurality of battery cells are in parallel to the upper cover and the bottom part.

The damper may be provided inside the bottom part and inside the upper cover.

The battery cell stack may be housed in the module frame such that the stacking directions of the plurality of battery cells are perpendicular to the upper cover and the bottom part.

The damper may be provided inside the side surface part.

In the battery module according to another embodiment of the present disclosure, the damper may be located between the module frame and the battery cell stack.

Fastening parts located at both ends of the damper may be located by coupling with the module frame.

The fastening part is coupled to the module frame and the fastening member, and the fastening member may be any one of a bolt, a nut, a rivet, and an adhesive.

The battery cell stack may be housed in the module frame such that the stacking directions of the plurality of battery cells are in parallel to the upper cover and the bottom part.

The damper is located between the bottom part and the battery cell stack, and may be located between the upper cover and the battery cell stack.

The battery cell stack may be housed in the module frame such that the stacking directions of the plurality of battery cells are perpendicular to the upper cover and the bottom part.

The damper may be located between the side surface part and the battery cell stack.

In the battery module according to other embodiment of the present disclosure, the damper may be located while replacing the module frame.

The battery cell stack may be housed in the module frame such that the stacking directions of the plurality of battery cells are in parallel to the upper cover and the bottom part, and the damper may be located while replacing the upper cover and the bottom part.

The battery cell stack is housed in the module frame such that the stacking directions of the plurality of battery cells are perpendicular to the upper cover and the bottom part, and the damper may be located while replacing the upper cover and the side surface part.

According to other embodiment of the present disclosure, there is provided a battery pack comprising the above-mentioned battery module.

### [Advantageous Effects]

According to embodiments of the present disclosure, by applying a module frame structure including a damper, it is possible to absorb and suppress cell swelling, thereby improving the safety and life of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a cross-sectional view of a conventional battery module;
Fig. 2 is a perspective view of a battery module according to an embodiment of the present disclosure;
Fig. 3 is an exploded perspective view of the battery module of Fig. 2;
Fig. 4 is a diagram showing a damper included in the battery module according to the present embodiment;
Fig. 5 is a cross-sectional view taken along line B-B' of Fig. 2;
Fig. 6 is a diagram showing a damper included in the battery module according to an embodiment of the present disclosure;
Fig. 7 is a cross-sectional view illustrating a process in which the damper of Fig. 6 absorbs impact generated outside;
Fig. 8 is a cross-sectional view taken along line B-B' of Fig. 2;
Figs. 9 and 10 are cross-sectional views of a battery module according to another embodiment of the present disclosure taken along line B-B' of Fig. 2;
Figs. 11 and 12 are cross-sectional views of a battery module according to other embodiment of the present disclosure taken along line B-B' of Fig. 2; and
Figs. 13 and 14 are cross-sectional views of a battery module according to other embodiment of the present disclosure taken along line B-B' of Fig. 2.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

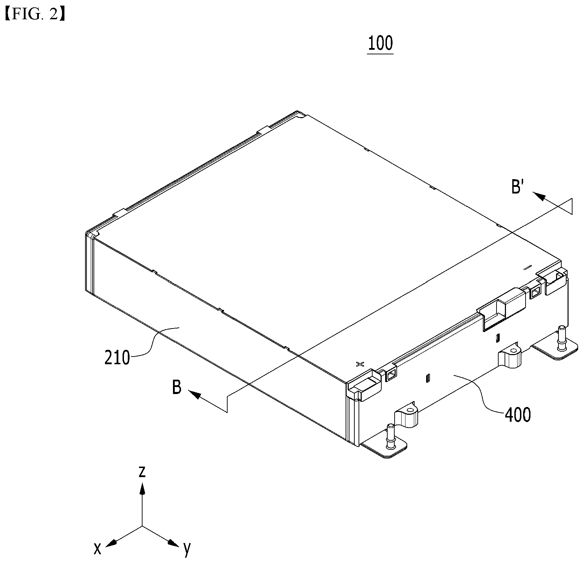

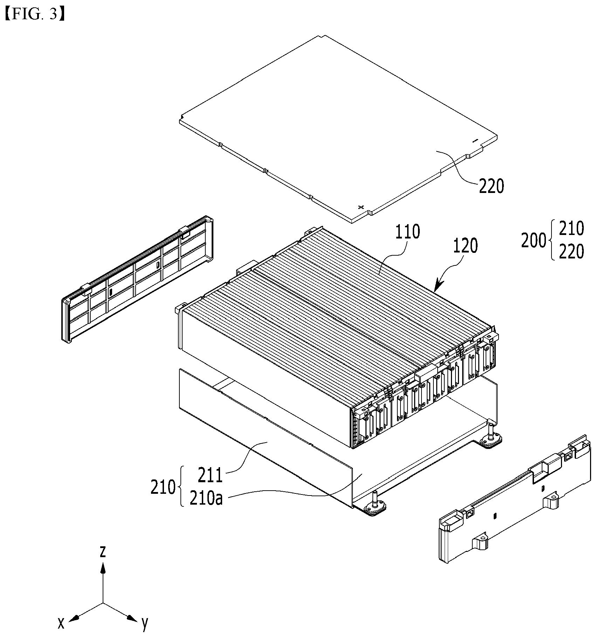

Fig. 2 is a perspective view of a battery module according to an embodiment of the present disclosure. Fig. 3 is an exploded perspective view of the battery module of Fig. 2.

Referring to Figs. 2 and 3, the battery module 100 according to an embodiment of the present disclosure includes a battery cell stack 120 in which a plurality of battery cells 110 are stacked, a module frame 200 that houses the battery cell stack 120, a damper provided inside the module frame 200, and end plates 400 that cover the front and rear surfaces of the battery cell stack 120.

First, the battery cell 110 may be a pouch-type battery cell. Such a pouch-type battery cell may be formed by housing the electrode assembly in a pouch case of a laminated sheet containing a resin layer and a metal layer, and then heat-sealing a sealing part of the pouch case. At this time, the battery cell 110 may be formed in a rectangular sheet-like structure.

Such a battery cell 110 may be formed in plural numbers, and the plurality of battery cells 110 can be stacked so as to be electrically connected to each other, thereby forming a battery cell stack 120. As shown in this figure, a plurality of battery cells 110 may be stacked along a direction parallel to the y-axis. Here, the direction parallel to the y-axis may be perpendicular to an acting direction of gravity.

The module frame 200 that houses the battery cell stack 120 may include an upper cover 220 and a U-shaped frame 210.

The U-shaped frame 210 may include a bottom part 210a and two side surface parts 211 extending upward from both ends of the bottom part 210a. The bottom part 210a may cover the lower surface (-z-axis direction) of the battery cell stack 120, and the side surface part 211 may cover both side surfaces (x-axis direction and -x-axis direction) of the battery cell stack 120.

The upper cover 220 may be formed in a single plate-shaped structure that wraps upper surface (z-axis direction) except for the lower surface and both side surfaces of the battery cell stack 120 wrapped by the U-shaped frame 210. The upper cover 220 and the U-shaped frame 210 can be joined by welding or the like in a state in which the corresponding corner portions are in contact with each other, thereby forming a structure that covers the battery cell stack 120 vertically and horizontally. In addition, the battery cell stack 120 can be physically protected through the upper cover 220 and the U-shaped frame 210. For this purpose, the upper cover 220 and the U-shaped frame 210 may include a metal material having a predetermined strength.

The module frame 200 may include a damper.

A damper is a device that controls the velocity of a displaced object to minimize positional changes. Also, when an object receives vibration or impact from the outside and generates kinetic energy, the damper quickly dissipates it as heat energy due to friction, etc., so that the displacement generated by vibration or impact applied from the outside can calm down and attenuate at an early stage.

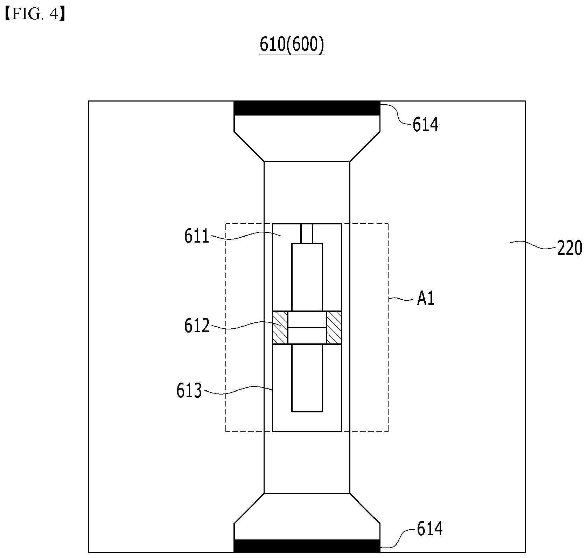

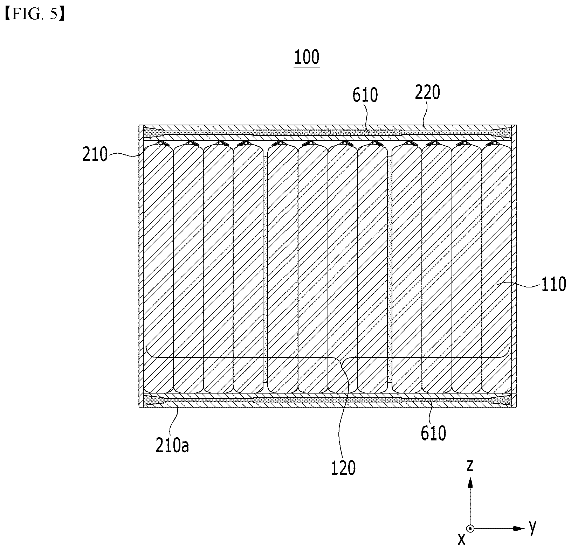

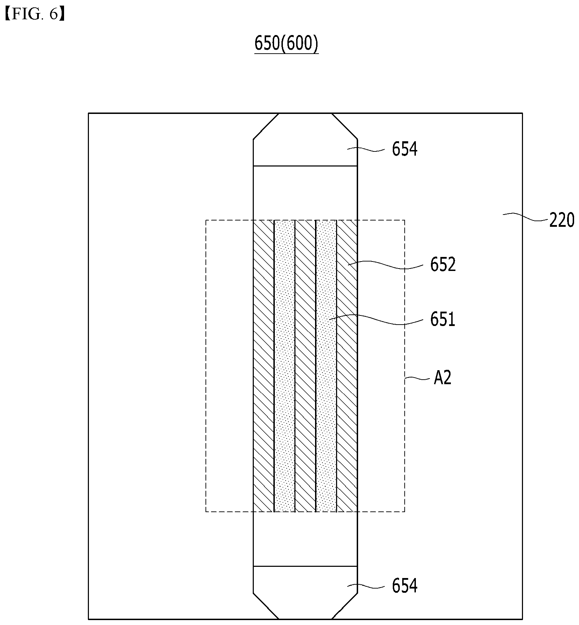

The damper applied to the battery module according to an embodiment of the present disclosure may be preferably a viscous damper 610 (Figs. 4 and 5) or a viscoelastic damper 650 (Figs. 6 to 8), but is not limited thereto, and any configuration can be used as long as it controls the velocity of the object that causes the displacement to minimize the positional change.

The damper may be provided inside the module frame 200. The damper may be located perpendicular to a direction in which the battery cells 110 are stacked. Generally, the battery cell stack 120 is housed so that the stacking direction of the battery cells 110 are parallel to the upper cover 220 and the bottom part 210a of the lower frame. In this case, the damper may be provided inside the upper cover 220 and the bottom part 210a of the lower frame. The damper provided inside the upper cover 220 and the damper provided inside the bottom part 210a of the lower frame may be one or more numbers.

The module frame 200 including the damper can be manufactured by a die casting method in which at least one damper is arranged in a steel mold, and then metal is injected into the steel mold. The metal constituting the module frame 200 may be, for example, aluminum.

When swelling occurs in the battery cell 110 due to charging and discharging of the battery, the position of the battery cell 110 may be partially changed as the volume of the battery cell 110 increases in the direction in which the battery cells 110 are stacked. In this case, the damper may minimize displacement of the battery cell 110. That is, the damper can significantly reduce the amount of positional change of the battery cell 110 while permitting a certain level of displacement of the battery cell 110 due to swelling. Therefore, the damper can absorb and suppress swelling to improve the life of the battery. Further, the damper may absorb vibration or impacts applied to the battery module 100 from the outside, thereby improving the stiffness and durability of the battery module 100. In addition, the damper can apply a pressing force generated from the viscous fluid of the viscous damper or the elastic body of the viscoelastic damper to the surface of the battery cell 110, thereby suppressing swelling and preventing capacity retention in the battery.

Meanwhile, although not specifically illustrated, the module frame 200 according to a modification may be a mono frame in the form of a metal plate in which the upper surface, the lower surface, and both side surfaces are integrated. That is, this is not a structure in which the U-shaped frame 210 and the upper cover 220 are coupled with each other, but may be a structure in which the upper surface, the lower surface, and both side surfaces are integrated by being manufactured by extrusion molding.

The end plate 400 is located on the open first side (y-axis direction) and the second side (-y-axis direction) of the module frame 200, so that it can be formed so as to cover the battery cell stack 120. Such an end plate 400 can physically protect the battery cell stack 120 and other electrical components from external impacts.

Meanwhile, although not specifically illustrated in the figure, a busbar frame on which the busbar is mounted and an insulating cover for electrical insulation, etc. may be located between the battery cell stack 120 and the end plate 400.

Fig. 4 is a diagram showing a damper included in the battery module according to the present embodiment. Fig. 5 is a cross-sectional view taken along line B-B' of Fig. 2.

Referring to Figs. 4 and 5, the upper cover 220 may include a damper 600, specifically, a viscous damper 610. That is, at least one viscous damper 610 may be provided inside the upper cover 220. The viscous damper 610 may be located inside the upper cover 220, in parallel with the stacking direction of the battery cells 110 of the battery cell stack 120. According to this figure, the viscous damper 610 is illustrated as being provided inside the upper cover 220, which is for illustrative purposes and not limited thereto, and may also be provided in the bottom part 210a of the U-shaped frame.

A first area A1 of Fig. 4 represents an internal cross section of the viscous damper 610. Referring to this, the viscous damper 610 may include a viscous fluid 611 and a piston 612 located within a cylinder 613.

When a swelling phenomenon occurs in the battery cell 110 and the position of the battery cell 110 changes, the kinetic energy is dissipated into other forms of energy, such as heat energy, while the piston 612 and the high-viscosity viscous fluid 611 of the viscous damper 610 move, thereby capable of minimizing the positional change of the battery cell 110 and absorbing swelling. Therefore, the amount of swelling of the battery that occurs during charging and discharging can be reduced, and the degree of swelling accumulated between cycles can also be reduced. Furthermore, the high-viscosity viscous fluid 611 of the viscous damper 610 applies a uniform pressing force to the surface of the battery cell 110, so that a certain part of the capacity retention phenomenon that may occur during battery use can also be prevented.

The viscous damper 610 may include fastening parts 614 at its both ends, respectively. When the viscous damper 610 is coupled with one surface of the module frame 200 or replaces a part of the module frame 200 (described later), the fastening part 614 may be weld-coupled to one surface of the module frame 200, or may be coupled using a fastening member such as a bolt, a nut, or a rivet, or may be coupled by applying an adhesive.

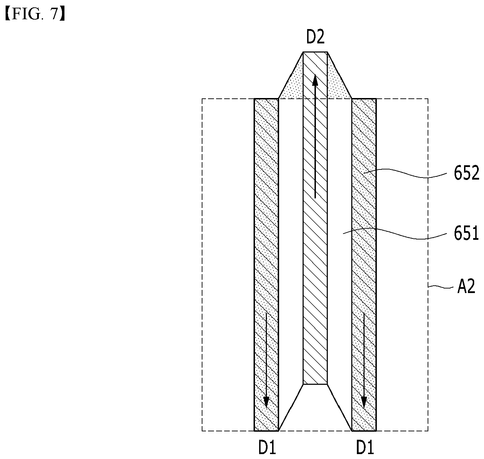

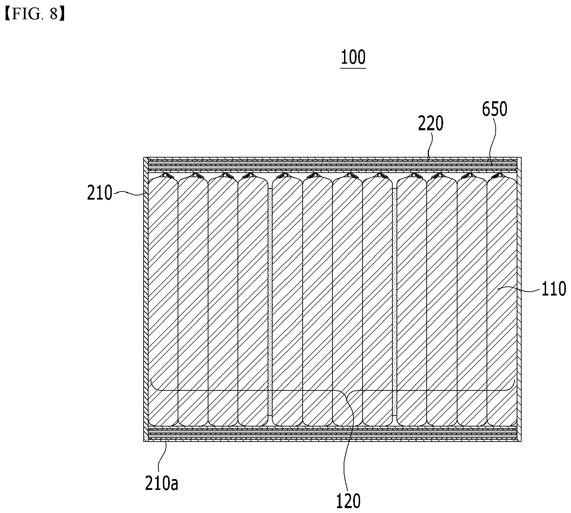

Fig. 6 is a diagram showing a damper included in the battery module according to an embodiment of the present disclosure. Fig. 7 is a cross-sectional view illustrating a process in which the damper of Fig. 6 absorbs impact generated outside. Fig. 8 is a cross-sectional view taken along line B-B' of Fig. 2.

Referring to Figs. 6 to 8, the upper cover 220 may include a damper 600, specifically, a viscoelastic damper 650. That is, at least one viscoelastic damper 650 may be provided inside the upper cover 220. The viscoelastic damper 650 may be located inside the upper cover 220, in parallel with the stacking direction of the battery cells 110 of the battery cell stack 120. According to this figure, the viscoelastic damper 650 is illustrated as being provided inside the upper cover 220, but this is for illustrative purposes and not limited thereto, and may also be provided inside the bottom part 210a of the U-shaped frame.

The second area A2 of Fig. 7 represents an internal cross section of the viscoelastic damper 650. Referring to this, the viscoelastic damper 650 may include an elastic body 651 and a steel plate 652.

The elastic body 651 and the steel plate 652 has a structure where there are alternately stacked, and surfaces with which the elastic body 651 and the steel plate 652 are in contact may be adhered to each other. The elastic body 651 may be formed of a rubber material, preferably highly damping rubber. However, the elastic body 651 is not limited thereto as long as it is a material having elasticity.

When a swelling phenomenon occurs in the battery cell 110 and the position of the battery cell 110 changes, the steel plate 652 of the viscoelastic damper 650 moves in the moving direction D1 of the battery cell 110 and the direction D2 opposite thereto, and vibration or impact can be offset by changing the shape of the elastic body 651 in contact with the steel plate 652 according to the movement of the steel plate 652. That is, by dissipating kinetic energy into other forms of energy such as heat energy through the movement of the steel plate 652 and the elastic body 651, it is possible to minimize the positional change of the battery cell 110 and absorb the swelling. Therefore, the amount of swelling of the battery that occurs during charging and discharging can be reduced, and the degree of swelling that accumulates between cycles can also be reduced. Furthermore, the elastic body 651 of the viscoelastic damper 650 applies a uniform pressing force to the surface of the battery cell 110, so that a certain part of the capacity retention phenomenon that may occur during battery use can also be prevented.

The viscoelastic damper 650 may include fastening parts 654 at its both ends, respectively. When the viscoelastic damper 650 is coupled with one surface of the module frame 200 or replaces a part of the module frame 200 (described later), the fastening part 654 may be weld-coupled to one surface of the module frame 200, or may be coupled using a fastening member such as a bolt, a nut, or a rivet, or may be coupled by applying an adhesive.

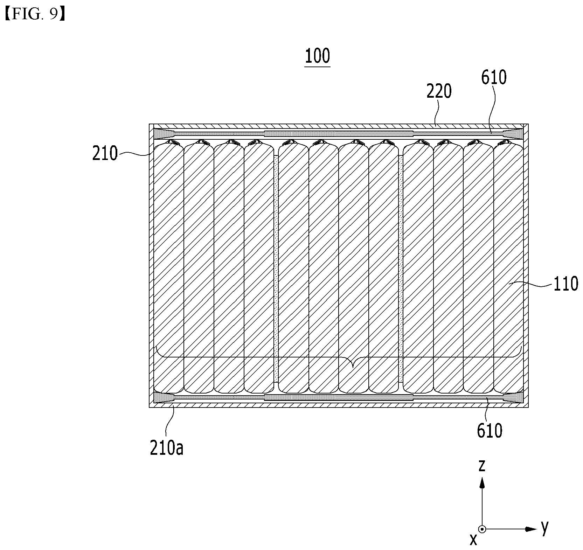

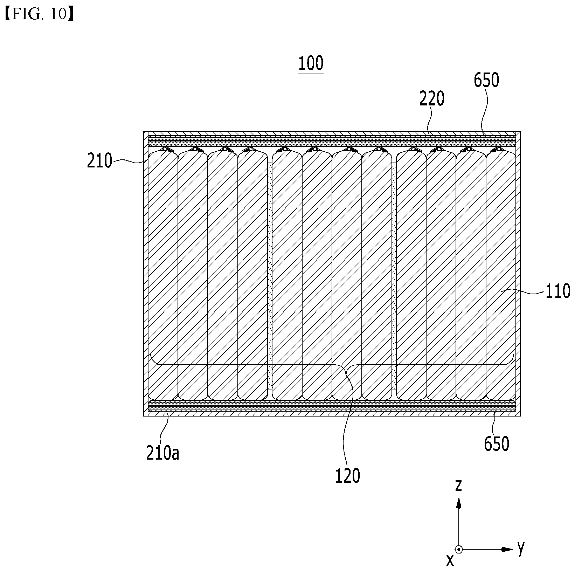

Figs. 9 and 10 are cross-sectional views of a battery module according to another embodiment of the present disclosure taken along line B-B' of Fig. 2. The battery module according to another embodiment of the present disclosure based on Figs. 9 and 10 is a modification of the embodiment of the present disclosure disclosed in Figs. 2 to 8, and the details of configurations similar to those described above are omitted.

The damper may be located adjacent to the module frame 200. The damper may be located while being in contact with one surface of the module frame 200. The damper may be located while being in contact with the inner surface of the module frame 200. The damper may be located between the module frame 200 and the battery cell stack 120. The damper may be provided between the upper cover 220 and the battery cell stack 120 and between the bottom part 210a of the lower frame and the battery cell stack 120.

Fig. 9 shows that the viscous damper 610 is located by coupling to one surface of the module frame 200. The viscous damper 610 may be located between the module frame 200 and the battery cell stack 120. Specifically, the viscous damper 610 may be provided between the upper cover 220 and the battery cell stack 120 and between the bottom part 210a of the lower frame and the battery cell stack 120. In this case, the fastening part 614 of the viscous damper 610 may be located by coupling with the side surface part 210 of the module frame 200, respectively.

Fig. 10 shows that the viscoelastic damper 650 is located by coupling to one surface of the module frame 200. The viscoelastic damper 650 may be located between the module frame 200 and the battery cell stack 120. Specifically, the viscoelastic damper 650 may be provided between the upper cover 220 and the battery cell stack 120 and between the bottom part 210a of the lower frame and the battery cell stack 120. In this case, the fastening part 654 of the viscoelastic damper 650 may be located by coupling with the side surface part 210 of the module frame 200, respectively.

Since the viscous damper 610 and the viscoelastic damper 650 are located on the inner surface of the module frame 200, the manufacturing process is simple and the process efficiency can be increased, as compared to the case where the viscous damper 610 and the viscoelastic damper 650 are provided inside the module frame 200. In addition, the battery cell stack 120 is located while being in contact with the viscous damper 610 and the viscoelastic damper 650, respectively, and thus, the viscous damper 610 and the viscoelastic damper 650 can directly cope with the position change of the battery cell 110 due to swelling, so that the swelling absorption and suppression effect can be further improved.

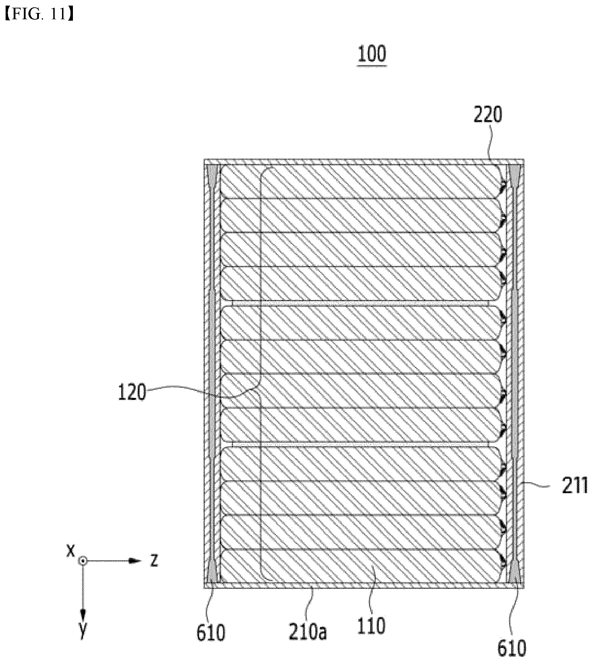

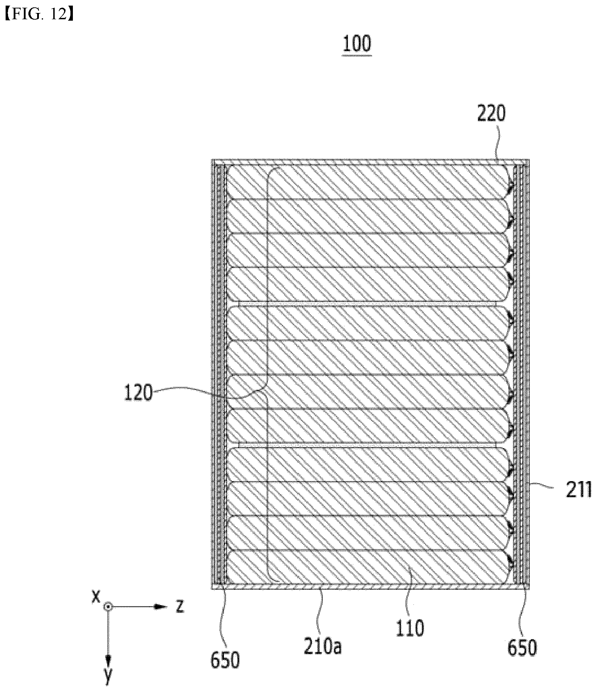

Figs. 11 and 12 are cross-sectional views of a battery module according to other embodiment of the present disclosure taken along line B-B' of Fig. 2. The battery module according to another embodiment of the present disclosure based on Figs. 11 and 12 is a modification of the embodiment of the present disclosure disclosed in Figs. 2 to 8, and the details of configurations similar to those described above are omitted.

Referring to Figs. 11 and 12, the battery cell stack 120 is stacked in the y-direction. The battery cell stack 120 is housed so that the stacking direction of the battery cells is perpendicular to the upper cover 220 and the bottom part 210a of the lower frame.

The viscous damper 610 and the viscoelastic damper 650 may be located in parallel to the stacking direction of the battery cell stack 120. The viscous damper 610 and the viscoelastic damper 650 may be provided inside the module frame 200, and specifically, the viscous damper 610 and the viscoelastic damper 650 may be provided inside the side portion 211 of the U-shaped frame.

The viscous damper 610 and the viscoelastic damper 650 may be provided anywhere inside the module frame 200, whereby structural stability can be secured by absorbing swelling regardless of the stacking direction of the battery cell stack, and the degree of capacity retention of the battery cell can be improved by realizing a uniform surface pressure structure.

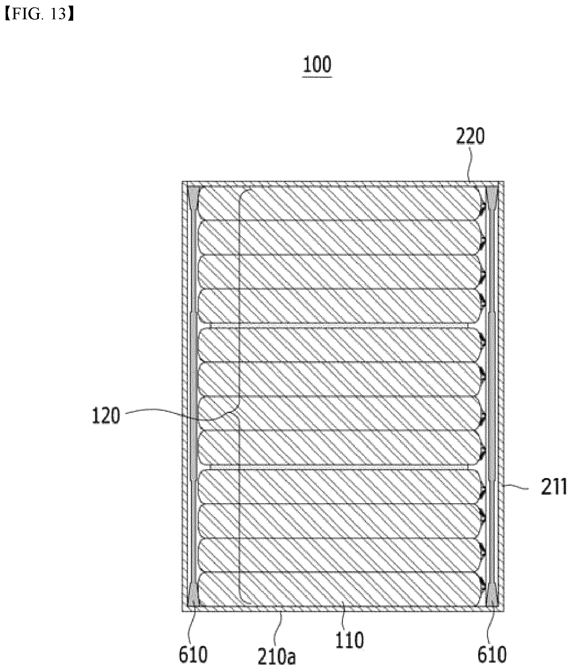

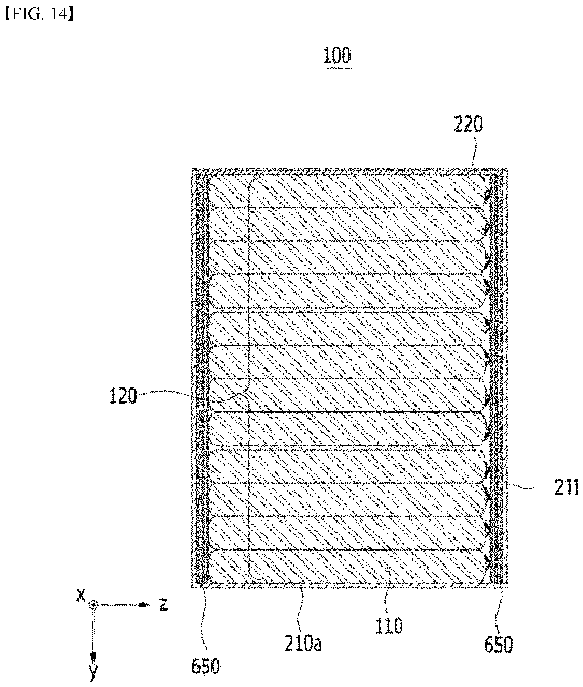

Figs. 13 and 14 are cross-sectional views of a battery module according to other embodiment of the present disclosure taken along line B-B' of Fig. 2. The battery module described in Figs. 13 and 14 is a modification of the embodiment of the present disclosure shown in Figs. 11 and 12, and the details of configurations similar to those described above are omitted.

Referring to Figs. 13 and 14, the battery cell stack 120 is stacked in the y-direction, and the battery cell stack 120 is housed so that the stacking direction of the battery cells is perpendicular to the upper cover 220 and the bottom part 210a of the lower frame.

The viscous damper 610 and the viscoelastic damper 650 may be located in parallel with the stacking direction of the battery cell stack 120.

The viscous damper 610 and the viscoelastic damper 650 may be located adjacent to the module frame 200. The viscous damper 610 and the viscoelastic damper 650 may be located while being in contact with one surface of the module frame 200. The viscous damper 610 and the viscoelastic damper 650 may be located while being in contact with the inner surface of the module frame 200. Specifically, the viscous damper 610 and the viscoelastic damper 650 may be located between the module frame 200 and the battery cell stack 120. In this case, the fastening parts 614 and 654 of the viscous damper 610 and the viscoelastic damper 650 may be located by coupling with the upper cover 220 and the bottom portion 210a of the module frame 200, respectively.

The viscous damper 610 and the viscoelastic damper 650 may be provided anywhere inside the module frame 200, whereby structural stability can be secured by absorbing swelling regardless of the stacking direction of the battery cell stack 120, and the degree of capacity retention of the battery cell can be improved by realizing a uniform surface pressure structure. In addition, since the viscous damper 610 and the viscoelastic damper 650 are located on the inner surface of the module frame 200, the manufacturing process is simple and thus process efficiency can be increased, as compared to the case where the viscous damper 610 and the viscoelastic damper 650 are provided inside the module frame 200. In addition, the battery cell stack 120 is located while being in contact with the viscous damper 610 and the viscoelastic damper 650, respectively, and thus, the viscous damper 610 and the viscoelastic damper 650 can directly cope with the position change of the battery cell 110 due to swelling, so that the swelling absorption and suppression effect can be further improved.

In addition, although not shown in the drawings of the present specification, the damper may be located while replacing a part of the module frame 200. For example, the damper may be located while replacing the bottom part 210a and the upper cover 220 of the module frame 200, and may be located while replacing the side surface part 211 of the module frame 200. Alternatively, it may be located by attaching to one side surface of the at least two or more inner beams 1110 or located by attaching to one side surface of the side frame 1150.

In the above case, since the process of manufacturing the module frame 200 by locating the damper inside the module frame 200 or the process of coupling the module frame 200 and the coupling parts 614 and 654 of the damper is not required, the manufacturing process efficiency can be improved, and the energy density per volume or energy density per weight can be improved due to a reduction in the number of parts.

The above-mentioned battery module and the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, also belongs to the scope of the present invention.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
120: battery cell stack
200: module frame
210: U-shaped frame
210a: bottom part
211: side surface part
220: upper cover
600: damper
610: viscous damper
650: viscoelastic damper

## Claims

1. A battery module comprising:
a battery cell stack in which a plurality of battery cells are stacked;
a module frame that houses the battery cell stack; and
a damper included in the module frame or located adjacent to the module frame,
wherein the module frame comprises an upper cover that wraps an upper surface of the battery cell stack and a bottom part that wraps a lower surface of the battery cell stack, and
wherein the damper comprises a viscous damper or a viscoelastic damper.

2. The battery module according to claim 1 wherein:
the damper is provided inside the battery frame.

3. The battery module according to claim 2 wherein:
the battery cell stack is housed in the module frame such that the stacking directions of the plurality of battery cells are in parallel to the upper cover and the bottom part.

4. The battery module according to claim 3 wherein:
the damper is provided inside the bottom part and inside the upper cover.

5. The battery module according to claim 2 wherein:
the battery cell stack is housed in the module frame such that the stacking directions of the plurality of battery cells are perpendicular to the upper cover and the bottom part.

6. The battery module according to claim 5 wherein:
the damper is provided inside the side surface part.

7. The battery module according to claim 1 wherein:
the damper is located between the module frame and the battery cell stack.

8. The battery module according to claim 7 wherein:
fastening parts located at both ends of the damper are located by coupling with the module frame.

9. The battery module according to claim 8 wherein:
the fastening part is coupled to the module frame and a fastening member, and
the fastening member is any one of a bolt, a nut, a rivet, and an adhesive.

10. The battery module according to claim 7 wherein:
the battery cell stack is housed in the module frame such that the stacking directions of the plurality of battery cells are in parallel to the upper cover and the bottom part.

11. The battery module according to claim 10 wherein:
the damper is located between the bottom part and the battery cell stack, and is located between the upper cover and the battery cell stack.

12. The battery module according to claim 7 wherein:
the battery cell stack is housed in the module frame such that the stacking directions of the plurality of battery cells are perpendicular to the upper cover and the bottom part.

13. The battery module according to claim 12 wherein:
the damper is located between the side surface part and the battery cell stack.

14. The battery module according to claim 1 wherein:
the damper is located while replacing the module frame.

15. The battery module according to claim 14 wherein:
the battery cell stack is housed in the module frame such that the stacking directions of the plurality of battery cells are in parallel to the upper cover and the bottom part, and
the damper is located while replacing the upper cover and the bottom part.

16. The battery module according to claim 14 wherein:
the battery cell stack is housed in the module frame such that the stacking directions of the plurality of battery cells are perpendicular to the upper cover and the bottom part, and
the damper is located while replacing the upper cover and the side surface part.

17. A battery pack comprising the battery module according to claim 1.
